# EUROPÄISCHE PATENTSCHRIFT

(11) **EP 3 543 680 B1**
(45) Veröffentlichungstag und Bekanntmachung des Hinweises auf die Patenterteilung: **03.03.2021**
(21) Anmeldenummer: 19164048.1
(22) Anmeldetag: 20.03.2019
(51) Int. Cl.: G01N 17/00, B01L 7/00, B01L 9/06

(54) **VORRICHTUNG UND VERFAHREN ZUR THERMISCHEN LAGERUNG VON PROBEN**
DEVICE AND METHOD FOR THE THERMAL STORAGE OF SAMPLES
DISPOSITIF ET PROCÉDÉ DESTINÉS AU STOCKAGE THERMIQUE D'ECHANTILLONS

(30) Priorität: 21.03.2018 DE 102018106601
(43) Veröffentlichungstag der Anmeldung: 25.09.2019
(73) Patentinhaber: Fragol AG, 45481 Mülheim (DE)
(72) Erfinder: Müske, Heiner, 45479 Mülheim (DE); Schuster, Christoph, 68163 Mannheim (DE)
(74) Vertreter: Cohausz & Florack

(56) Entgegenhaltungen:
- DE-C2- 19 946 427
- US-A- 4 504 733
- US-A- 4 950 608
- US-A- 5 399 840

## Beschreibung

Die Erfindung betrifft eine Vorrichtung zur thermischen Lagerung von Proben, mit mindestens einer Probenhalterung, mit einer Mehrzahl von Probenbehältern, mit mindestens einem Heizelement und mit mindestens einem Temperatursensor, wobei die Probenbehälter zur Aufnahme der Proben ausgestaltet sind, wobei die Probenhalterung zumindest teilweise aus einem thermisch leitfähigen Material gefertigt ist, wobei die Probenbehälter zumindest teilweise in der Probenhalterung angeordnet sind und wobei das mindestens eine Heizelement die Proben mittelbar über ein Heizen der Probenhalterung auf eine vorbestimmte Prüftemperatur erwärmt und die Proben bei der Prüftemperatur über einen vordefinierten Prüfzeitraum tempert. Die Erfindung betrifft ebenfalls ein Verfahren zur thermischen Lagerung von Proben.

Damit sichergestellt werden kann, dass Materialien, die über einen längeren Zeitraum einer hohen Temperatur ausgesetzt sind, funktionsfähig sind, werden die Materialien hinsichtlich ihrer thermischen Stabilität geprüft. Im Rahmen einer solchen Prüfung werden insbesondere die Zersetzung der Materialien und/oder die gebildeten Alterungsprodukte untersucht. Materialien, die hinsichtlich ihrer thermischen Stabilität geprüft werden müssen, sind jegliche Wärmeträgermedien, welche beispielsweise in Heizkreisläufen eingesetzt werden können. Die zu prüfenden Materialien sind dabei in der Regel flüssig oder fließfähig. Bevorzugt handelt es sich bei den Wärmeträgermedien um Öle. Unter dem Oberbegriff der Öle lassen sich beispielsweise fette Öle, ätherische Öle, Mineralöle und Silikonöle subsumieren.

Für die Prüfung der thermischen Stabilität von zuvor genannten Materialien, insbesondere von Wärmeträgermedien, wird ein Prüfverfahren nach DIN 51528 angewendet. Hierfür ist es notwendig, dass die Proben über mindestens 480 Stunden, teilweise über 1000 Stunden, bei einer vorgegebenen Prüftemperatur gelagert werden. Bei den vorgegebenen Prüftemperaturen kann es sich beispielsweise um eine Temperatur von 400°C handeln. Während des Prüfzeitraums dürfen die Temperaturschwankungen maximal +/- 1°C bzw. +/-1 Kelvin betragen. Zur Testung werden die Proben in Probenbehälter aus Edelstahl oder in Glasampullen gefüllt, wobei die Glasampullen anschließend in einen Edelstahlbehälter eingeschlossen werden. Es müssen jeweils drei Proben des gleichen Wärmeträgermediums getestet werden.

Aus dem Stand der Technik ist es bereits bekannt, die Probenbehälter in einen Wärmeschrank zu stellen und die Proben in diesem Wärmeschrank bei einer bestimmten Prüftemperatur über den gewünschten Prüfzeitraum zu lagern. Problematisch ist jedoch, dass die Wärmeschränke häufig eine thermische Inhomogenität von mehreren Grad Celsius bzw. Kelvin aufweisen, so dass diese nicht dazu geeignet sind, mehrere Proben gleichzeitig unter denselben Bedingungen thermisch zu lagern. Dementsprechend können die Anforderungen der DIN 51528, wonach drei Proben unter einer nahezu identischen Temperatur getestet werden müssen, durch die Testung mittels eines solchen Wärmeschranks häufig nicht in hinreichender Weise erfüllt werden.

Aus der EP 3 106 225 A1 ist es bekannt, die Probenbehälter auf einer karusselartigen Probenhalterung anzuordnen. Die Probenhalterung ist in einem Wärmeschrank gelagert und mittels einer Antriebswelle mit einer außerhalb des Wärmeschranks befindlichen Antriebsvorrichtung verbunden. Aufgrund der Bewegung der einzelnen Probenbehälter und einer Luftumwälzung der in dem Wärmeschrank befindlichen Luft, die durch an der Probenhalterung befindliche Schaufelflächen zur Verfügung gestellt wird, können die Proben während der Prüfdauer gleichmäßig temperiert werden. Nachteilig an einer derartigen Ausgestaltung sind allerdings die hohe Störanfälligkeit der beweglichen Elemente sowie der Energieaufwand für den Antrieb der Antriebswelle. Zusätzlich ist die Fertigung einer solchen Vorrichtung mit einem erheblichen konstruktiven Aufwand verbunden. Aufgrund einer Durchführung der Antriebswelle und einer Tür zur Öffnung des Wärmeschrank ist eine thermische Isolierung der aus der EP 3 106 225 A1 bekannten Vorrichtung nur in unzureichender Weise möglich.

Die DE 199 46 427 C2 zeigt eine Vorrichtung zum definierten gleichzeitigen Wärmebehandeln von mehreren Probenbehältern mit einem Metallblock, vorzugsweise aus Aluminium oder einer Aluminiumlegierung, wobei der Metallblock mehrere Aufnahmeöffnungen für Probenbehälter aufweist und mit einer elektrischen Beheizung in Form einer an der Unterseite des Metallblocks angeordneten Heizfolie versehen ist.

Aus der US 4,504,733 A ist eine Probenhalterung aus Aluminium bekannt, die eine Mehrzahl von Probenhalterungen, Heizelementen und einen Temperatursensor aufweist.

Die US 5,399,840 A zeigt einen Heizblock, welcher Sacklochbohrungen zur Aufnahme von Proben aufweist. Der Heizblock ist in einer Aussparung eines Gehäuses auf einer Bodenplatte angeordnet.

Aus der US 4,950,608 A ist ein Metallblock mit Aufnahmen für Proben bekannt. In dem Metallblock sind eine Vielzahl von vertikal ausgerichteten Heizelementen angeordnet.

Davon ausgehend liegt der Erfindung das technische Problem zugrunde, eine Vorrichtung und ein Verfahren zur thermischen Lagerung von Proben anzugeben, wobei die Vorrichtung bzw. das Verfahren in konstruktiv simpler und energieeffizienter Weise umzusetzen sind.

Das zuvor aufgeführte technische Problem wird erfindungsgemäß durch eine Vorrichtung zur thermischen Lagerung von Proben mit mindestens einer Probenhalterung, mit einer Mehrzahl von Probenbehältern, mit mindestens einem Heizelement und mit mindestens einem Temperatursensor, wobei die Probenbehälter zur Aufnahme der Proben ausgestaltet sind, wobei die Probenhalterung zumindest teilweise aus einem thermisch leitfähigen Material gefertigt ist, wobei die Probenbehälter zumindest teilweise in der Probenhalterung angeordnet sind und wobei das mindestens eine Heizelement die Proben mittelbar über ein Heizen der Probenhalterung auf eine vorbestimmte Prüftemperatur erwärmt und die Proben bei der Prüftemperatur über einen vordefinierten Prüfzeitraum tempert, dadurch gelöst, dass die Probenhalterung Bohrungen zur Aufnahme der Probenbehälter, des mindestens einen Heizelements und des mindestens einen Temperatursensors aufweist und dass die Bohrungen zur Aufnahme von Probenbehältern jeweils einen im Wesentlichen identischen Abstand von der zumindest einen Bohrung zur Aufnahme des Heizelements aufweisen.

Der Begriff "Tempern" beschreibt dabei allgemein das Erwärmen eines Materials, hier Probe, über einen längeren Zeitraum.

Dabei ist es bevorzugt, dass die Probenhalterung vollständig aus dem thermisch leitfähigen Material hergestellt ist. Mittelbares Heizen bedeutet, dass der von dem Heizelement zur Verfügung gestellte Wärmestrom mittels des thermisch leitfähigen Materials an die Probenbehälter übertragen wird. Hierdurch können die in den Probenbehältern befindlichen Proben in zuverlässiger Weise auf einer vorbestimmten Prüftemperatur über einen vordefinierten Prüfzeitraum getempert werden. Insbesondere sind keine beweglichen Elemente vorhanden, die regelmäßig eine hohe Störanfälligkeit aufweisen. Da keine störanfälligen beweglichen Elemente vorhanden sind und zudem kein Wellenantrieb einer Drehvorrichtung benötigt wird, werden Ausfälle und der Energieaufwand vermieden.

Bevorzugt sind Temperatursensor und Heizelement ebenfalls zumindest teilweise in der Probenhalterung angeordnet. Es ist weiter bevorzugt, dass das Heizelement mittels eines Steuermittels mit dem Temperatursensor verbunden ist, so dass der von dem Heizelement an die Probenhalterung bzw. mittelbar an die Probenbehälter abgegebene Wärmefluss in Abhängigkeit der von dem Temperatursensor gemessenen Temperatur geregelt werden kann. Hierdurch kann die Temperatur der einzelnen Probenbehälter bzw. der in den Probenbehältern befindlichen Proben über den gesamten Prüfzeitraum im Wesentlichen auf der gewünschten Prüftemperatur gehalten werden. Insbesondere werden Abweichungen von mehr als einem °C bzw. mehr als einem Kelvin vermieden. Unter einem Temperatursensor werden jegliche elektrische oder elektronische Bauelemente verstanden, die ein Signal, vorzugsweise ein elektrisches Signal, als Maß für die Temperatur liefern.

Des Weiteren ist es bevorzugt, dass zumindest zwei Temperatursensoren in der Probenhalterung angeordnet sind, da hierdurch eine genauere Aussage über die Temperatur- bzw. Wärmeverteilung in der Probenhalterung getroffen werden kann. Bevorzugt dient dabei ein Temperatursensor der Regelung des mittels des Heizelements zuzuführenden Wärmestroms, wobei der andere Temperatursensor der Temperaturkontrolle dient.

Die Probenhalterung weist Bohrungen zur Aufnahme der Probenbehälter, des mindestens einen Heizelements und des mindestens einen Temperatursensors auf. Mittels Vorsehen von Bohrungen können die Probenbehälter, das Heizelement und der Temperatursensor in konstruktiv günstiger Weise in der Probenhalterung angeordnet werden. Bevorzugt sind die Bohrungen zur Aufnahme der Probenbehälter in eine Oberseite der Probenhalterung eingebracht, wohingegen die Bohrungen zur Aufnahme des Heizelements und des Temperatursensors in einer Unterseite der Probenhalterung eingebracht sind.. Des Weiteren ist es bevorzugt, dass es sich bei den Bohrungen um Sacklochbohrungen handelt, die Bohrung die Probenhalterung also nicht vollständig durchdringt.

Nach einer weiteren bevorzugten Ausgestaltung der Erfindung weist das thermisch leitfähige Material der Probenhalterung eine Wärmeleitfähigkeit λ größer als 175 W/(m^{∗}K), bevorzugt eine Wärmeleitfähigkeit λ größer als 225 W/(m^{∗}K), auf. Eine derartige Ausgestaltung führt zu einer zuverlässigen Übertragung der mittels des Heizelements erzeugten Wärme zu den Probenbehältern und den darin befindlichen Proben. Materialien mit einer derartigen Wärmeleitfähigkeit weisen zudem eine hohe Fähigkeit zur Energiespeicherung auf. Dementsprechend muss, sobald die gewünschte Prüftemperatur erreicht ist, nur noch ein geringer Wärmestrom von dem Heizelement an die Probenhalterung abgegeben werden, um die Probenbehälter und die darin befindlichen Proben auf der gewünschten Prüftemperatur zu halten. Dies ist insbesondere hinsichtlich energetischer Aspekte vorteilhaft. Zusätzlich ermöglich eine derart hohe Wärmeleitfähigkeit einen schnellen und automatischen Temperaturausgleich innerhalb der Probenhalterung.

Bevorzugt handelt es sich bei dem thermisch leitfähigen Material um Kupfer oder Aluminium. Mittels der zuvor genannten Werkstoffe kann eine Wärmeleitfähigkeit λ größer als 175 W/(m^{∗}K) vorgesehen werden, ohne dabei teure Materialen verwenden zu müssen. Aluminium weist bei einem Aluminiumgehalt von 99,5% eine Wärmeleitfähigkeit λ von 235 W/(m^{∗}K) auf, wobei reines Kupfer eine Wärmeleitfähigkeit λ von 401 W/(m^{∗}K) aufweist. Kupfer wird insbesondere dann als Material für die Probenhalterung bevorzugt, wenn eine besonders hohe Prüftemperatur erreicht werden soll. Aluminium bietet dahingegen Vorteile bei den Materialkosten.

Eine weitere bevorzugte Ausgestaltung der Erfindung ist dadurch gekennzeichnet, dass die Probenbehälter einen länglichen Grundkörper mit einem ersten Außendurchmesser und einen Verschluss mit einem zweiten Außendurchmesser aufweisen und dass der zweite Außendurchmesser größer als der erste Außendurchmesser ist. Es ist ebenfalls möglich beide Außendurchmesser identisch auszugestalten oder den zweiten Außendurchmesser kleiner als den ersten Außendurchmesser vorzusehen. Des Weiteren ist es bevorzugt, dass der Verschluss als Schraubverschluss ausgestaltet ist und mittels eines an dem länglichen Grundkörper angeordneten Innen- oder Außengewindes mit dem Grundkörper verschraubt ist. Des Weiteren ist es bevorzugt, dass die Probenbehälter, insbesondere der Grundkörper der Probenbehälter, aus Edelstahl, Aluminium oder Kupfer gefertigt ist. Alternativ ist es auch möglich den Probenbehälter als Glasampulle vorzusehen und vorzugsweise mit einer Metallhülle aus Aluminium oder Kupfer zu ummanteln.

Bei der Ausgestaltung des Probenbehälters als Glasampulle wird als Werkstoff für die Glasampulle bevorzugt Borosilikatglas oder Duran verwendet. Der längliche Grundkörper der Glasampulle wird vorzugsweise mittels einer Schmelzverbindung mit dem Verschluss der Glasampulle verbunden. Die Metallhülle ist vorzugweise ebenfalls durch einen Verschluss verschlossen, welcher bspw. als Stopfen oder als Schraubverschluss ausgestaltet ist.

Bei der Ausgestaltung des Probenbehälters aus Edelstahl, Aluminium oder Kupfer ist dieser bevorzugt mittels eines Schraubverschlusses verschlossen. Des Weiteren ist es bevorzugt, dass der Probenbehälter mit einer Metallhülle aus Aluminium oder Kupfer ummantelt ist, wobei die Metallhülle nach einer bevorzugten Ausgestaltung oberseitig ebenfalls durch einen Verschluss verschlossen ist, wobei der Verschluss konisch an der der Metallhülle verschraubt ist.

Die Probenbehälter weisen bevorzugt ein Raumvolumen von mindestens 20 ml auf, wobei die zu tempernden Proben ein Raumvolumen von mindestens 10 ml einnehmen.

Bevorzugt entspricht der Durchmesser der Bohrungen zur Aufnahme der Probenbehälter im Wesentlichen dem ersten Außendurchmesser. Bei einer solchen Ausgestaltung können die Probenbehälter allerdings nicht vollständig in der Probenhalterung versenkt werden, da der Verschluss stets aus der Probenhalterung herausragt. Dementsprechend wird bei einer solchen Ausgestaltung eine Isolierung benötigt, die zumindest den aus dem Probenbehälter herausragenden Verschluss gegenüber der Umgebung der Probenhalterung isoliert. Mittels eines Herausragens des Verschlusses der Probenbehälter aus der Probenhalterung lassen sich die Proben allerdings komfortabel einsetzen und entnehmen.

Nach einer alternativen Ausgestaltung ist es ebenfalls möglich, dass die Bohrungen zur Aufnahme der Probenbehälter jeweils zwei unterschiedliche Durchmesser aufweisen, bevorzugt einen ersten Durchmesser, der im Wesentlichen zu dem ersten Außendurchmesser des Grundkörpers korrespondiert und einen zweiten Durchmesser, der im Wesentlichen zu dem zweiten Außendurchmesser des Verschlusses korrespondiert. Hierdurch lässt sich ein zuvor genannter Probenbehälter komplett in der Probenhalterung versenken, weshalb der Probenbehälter entlang seiner gesamten länglichen Erstreckung zuverlässig mittels der Probenhalterung temperiert werden kann.

Nach einer weiteren alternativen Ausgestaltung der Erfindung ist der Durchmesser der Bohrungen zur Aufnahme der Probenbehälter größer oder gleich dem zweiten Außendurchmesser, wobei vorzugsweise zusätzlich zu den Probenbehältern Adapter in den Bohrungen angeordnet sind. Die Adapter sind dabei bevorzugt rohrförmig ausgestaltet und vorzugsweise oberseitig und/oder unterseitig mittels eines Deckels verschlossen. Die Adapter sind insbesondere dazu ausgestaltet den länglichen Grundkörper des Probenbehälters aufzunehmen. Die Adapter können allerdings auch derart ausgestaltet sein, dass diese sowohl den Grundkörper als auch den Verschluss des Probenbehälters aufnehmen. Die Probenbehälter können also vollständig in der Probenhalterung versenkt werden, wodurch die Probenbehälter entlang ihrer gesamten länglichen Erstreckung zuverlässig mittels der Probenhalterung temperiert werden können. Die Adapter sind vorzugweise aus Aluminium oder Kupfer ausgestaltet.

Eine weitere bevorzugte Ausgestaltung der Erfindung ist dadurch gekennzeichnet, dass die Probenhalterung in Form eines zylindrischen Körpers, bevorzugt in Form eines kreiszylindrischen Körpers, ausgebildet ist, wobei der zylindrische Körper eine Mantelfläche und zwei die Mantelfläche begrenzende Schnittflächen aufweist und wobei das Heizelement vorzugweise in einer Bohrung im Mittelpunkt einer Schnittfläche des zylindrischen Körpers angeordnet ist. Bevorzugt ist nur ein Heizelement in der Probenhalterung angeordnet. Aufgrund der einfachen Geometrie der Probenhalterung können in unkomplizierter Weise Aussagen über Temperaturgradienten anhand der zuzuführenden Leistung getroffen werden. Bevorzugt ist die Bohrung für den Temperatursensor in der die Bohrung für das Heizelement aufweisenden Seitenfläche des zylindrischen Körpers angeordnet. Des Weiteren ist es bevorzugt, dass die Bohrungen für die Probenbehälter in der der Bohrung für das Heizelement gegenüberliegenden Seitenfläche des zylindrischen Körpers ausgebildet sind. Nach einer alternativen Ausgestaltung sind alle Bohrungen in der die Bohrung für das Heizelement aufweisenden Seitenfläche des zylindrischen Körpers angeordnet. Die zylindrische Ausgestaltung der Probenhalterung führt zu einer kompakten und platzsparenden Ausgestaltung der Probenhalterung. Bevorzugt sind die Schnittflächen als Schnittkreisflächen ausgestaltet, wobei die beiden Schnittkreisflächen parallel zueinander verlaufen. Ein solcher Zylinder weist bevorzugt einen Durchmesser zwischen 7 und 12 cm, besonders bevorzugt zwischen 9 und 10 cm, auf.

Die Bohrungen zur Aufnahme von Probenbehältern weisen jeweils einen im Wesentlichen identischen Abstand von der zumindest einen Bohrung zur Aufnahme des Heizelements auf. Durch einen im Wesentlichen identischen Abstand der Bohrungen für die Probenbehälter von der Bohrung für das Heizelement kann in zuverlässiger Weise für jeden Probenbehälter eine im Wesentlichen identische Prüftemperatur ermöglicht und sichergestellt werden. Insbesondere ist es bevorzugt, dass die Bohrungen für die Probenbehälter eine Symmetrie zu der Mittelachse des zylindrischen Körpers aufweisen. Auch bei zwei Bohrungen für Heizelemente können zwei Bohrungen zur Aufnahme von Probenbehältern im Wesentlichen identische Abstände zu den beiden Bohrungen aufweisen.

Des Weiteren ist es bevorzugt, dass die Probenhalterung zweiteilig ausgeführt ist, wobei ein Teil der Probenhalterung, bevorzugt ein oberer Teil der Probenhalterung von einem unteren Teil der Probenhalterung entfernbar ist, so dass die in der Probenhalterung gelagerten Probenbehälter entnehmbar sind. Eine derartige Ausgestaltung ist insbesondere hinsichtlich des Einsetzens und der Entnahme der Probenbehälter aus der Probenhalterung vorteilhaft.

Dabei ist es bevorzugt, dass der untere Teil eine Höhe von 15 bis 28 cm, besonders bevorzugt von 20 bis 24 cm aufweist, wohingegen der obere Teil eine Höhe von 1 bis 6 cm, besonders bevorzugt von 2 bis 4 cm, aufweist.

Des Weiteren ist bei der zweiteiligen Ausgestaltung bevorzugt, dass die Unterseite des unteren Teils der Probenhalterung die Bohrung für das Heizelement sowie zumindest eine Bohrung für den Temperatursensor, bevorzugt zwei Bohrungen für jeweils einen Temperatursensor, aufweist.

Die Bohrung zur Aufnahme des Heizelements ist vorzugsweise im Mittelpunkt der unteren Schnittfläche des unteren Teils des zylindrischen Körpers angeordnet und weist bevorzugt einen Durchmesser in einem Bereich von 8 bis 12 cm und eine Tiefe von 20 cm auf. Die Bohrungen zur Aufnahme der Temperatursensoren sind bevorzugt einander gegenüberliegend angeordnet und weisen bevorzugt eine Tiefe von 10 bis 15 cm auf. Diese Abmessungen sind insbesondere vorteilhaft, da die aus dem Stand der Technik bekannten Heizelemente und Temperatursensoren üblicherweise derartige Abmessungen aufweisen und dementsprechend ohne Anpassung in der erfindungsgemäßen Vorrichtung verwendet werden können.

Des Weiteren ist bei der zweiteiligen Ausgestaltung der Probenhalterung bevorzugt, dass die Oberseite des unteren Teils der Probenhalterung die Bohrungen zur Aufnahme der Probenbehälter aufweist. Diese sind bevorzugt konzentrisch in einem im Wesentlichen identischen Abstand zu der Mittelachse der oberen Schnittfläche des zylindrischen Körpers angeordnet. Es ist bevorzugt, dass zwischen 4 und 8 Bohrungen, besonders bevorzugt zwischen 5 und 7 Bohrungen, zur Aufnahme von Probenbehältern vorgesehen werden. Die Bohrungen zur Aufnahme von Probenbehältern weisen vorzugsweise eine Tiefe zwischen 17 und 23 cm, besonders bevorzugt eine Tiefe zwischen 19 und 21 cm, und einen Durchmesser zwischen 26 und 33 cm, besonders bevorzugt einen Durchmesser zwischen 28 und 31 cm, auf. Hinsichtlich des oberen Teils der Probenhalterung ist es bevorzugt, dass diese ebenfalls Bohrungen zur Aufnahme der Probenbehälter, bevorzugt Sacklochbohrungen, aufweist, die zu den Bohrungen zur Aufnahme der Probenbehälter des unteren Teils korrespondieren. Hierdurch können die Probenbehälter nach einem Entfernen des oberen Teils komfortabel aus der Probenhalterung entnommen werden. Des Weiteren ist bevorzugt, dass an der Oberseite des oberen Teils der Probenhalterung eine Haltevorrichtung, beispielsweise in Form einer Lasche, angeordnet ist, mit Hilfe derer das obere Teil der Probenhalterung komfortabel angehoben und abgenommen werden kann.

Eine weitere bevorzugte Ausgestaltung der Erfindung ist dadurch gekennzeichnet, dass der obere Teil der Probenhalterung und der untere Teil der Probenhalterung mittels einer Sicherungseinrichtung miteinander verbunden sind und dass die Sicherungseinrichtung ein ungewünschtes Entfernen des oberen Teils der Probenhalterung verhindert. Aufgrund eines durch das Tempern bedingten Druckanstiegs können die Probenbehälter in Ausnahmefällen platzen und den oberen Teil der Probenhalterung mit einer erheblichen Energie umherschleudern. Eine solche Sicherungseinrichtung verhindert ein unkontrolliertes Entfernen bzw. Umherschleudern des oberen Teiles der Probenhalterung.

Bevorzugt ist die Sicherungseinrichtung durch mehrere, bevorzugt zwei oder drei, in dem unteren Teil der Probenhalterung angeordnete Stangen, bevorzugt Metallstangen, gebildet. Diese sind vorzugsweise in zwei in der Oberseite des unteren Teils der Probenhalterung angeordneten Bohrungen verschraubt oder verschweißt. Die Bohrungen in dem unteren Teil sind bevorzugt als Sacklochbohrungen ausgestaltet. Der obere Teil der Probenhalterung weist zwei zu den Bohrungen in dem unteren Teil korrespondierende Durchgangsbohrungen auf. Mittels der Stangen lässt sich der obere Teil auf dem unteren Teil zentrieren. Die Stangen weisen in einem zusammengesetzten Zustand der Probenhalterung bevorzugt 2 bis 6 cm, besonders bevorzugt 3 bis 5 cm, Überstand zu der oberen Schnittfläche des oberen Teils der Probenhalterung auf. Die Stangen werden beabstandet von der oberen Schnittfläche des oberen Teils beispielsweise mittels eines an den Stangen ausgebildeten Gewindes und einer an dem Gewinde angeschraubten Mutter begrenzt. Hierdurch wird ein Anheben des oberen Teils um eine bestimmte Höhe ermöglicht, so dass Gas entweichen kann, allerdings wird das Anheben des oberen Teils mittels der Stangen geführt, so dass es sich hierbei um ein kontrolliertes Anheben des oberen Teils handelt und Schäden der Umgebung oder der erfindungsgemäßen Vorrichtung vermieden werden, da das obere Teil der Probenhalterung durch die Muttern in seiner translatorischen Bewegung begrenzt wird.

Nach einer weiteren bevorzugten Ausgestaltung der Erfindung ist die Probenhalterung zumindest teilweise von einer Isolierung umgeben. Insbesondere ist die Probenhalterung in ihrer Längserstreckung von einer Isolierung umgeben, damit die Probenbehälter und die darin befindlichen Proben gegenüber einer eine Temperaturdifferenz aufweisenden Umgebung isoliert sind. Weiterhin ist es bevorzugt, dass der gesamte Zylinder von einer Isolierschicht umgeben ist. Durch das Vorsehen einer Isolierschicht, kann die Energieeffizienz der Vorrichtung verbessert werden. Zusätzlich werden hierdurch Temperaturschwankungen vermieden, so dass die vorbestimmte Prüftemperatur in zuverlässiger Weise eingestellt werden kann. Es ist bevorzugt, dass die Isolierschicht eine Dicke in einem Bereich von 5 cm bis 15 cm, bevorzugt von 9 cm bis 11 cm aufweist. Bei dem Vorsehen einer Isolierschicht von 10 cm, die die gesamte Probenhalterung umgibt, wird bei einer üblichen Prüftemperatur bspw. eine Leistung von 100 W benötigt, um die Probenbehälter und die in den Probenbehältern befindlichen Proben auf der Prüftemperatur konstant zu tempern. Als Materialien für die Isolierung wird bevorzugt Calciumsilicat, Schaumglas oder Mineralwolle verwendet.

Nach einer weiteren bevorzugten Ausgestaltung der Erfindung weist die Isolierung einen Isolierboden, eine Isolierummantelung und einen Isolierdeckel auf, wobei ein Rohr die Isolierung ummantelt und wobei insbesondere eine Bodenplatte eine Öffnung des Rohres verschließt. Durch eine derartige konstruktive Ausgestaltung ist es möglich, die Probenhalterung in energetisch günstiger Weise gegenüber einer Umgebung der Probenhalterun zu isolieren. Bei dem Rohr handelt es sich vorzugweise um ein Stahlrohr, welches einen Innendurchmesser in einem Bereich von 25 bis 35 cm, bevorzugt in einem Bereich von 28 bis 32 cm, eine Wandstärke in einem Bereich von 1 bis 5 mm, bevorzugt in einem Bereich von 2 bis 4 mm und eine Höhe in einem Bereich von 50 bis 60 cm, bevorzugt von 53 bis 57 cm aufweist. Die Bodenplatte ist bevorzugt mittels einer Schweißverbindung mit dem Rohr verbunden.

Der Isolierboden, die Isolierummantelung und der Isolierdeckel weisen bevorzugt einen im Wesentlichen identischen Außendurchmesser auf, welcher vorzugsweise im Wesentlichen dem Innendurchmesser des Rohres entspricht. Die Isolierummantelung und der Isolierdeckel weisen vorzugsweise Aussparungen zur Aufnahme der Probenhalterung auf.

Hinsichtlich einer konstruktiv günstigen Stromversorgung des Heizelement sowie des mindestens einen Temperatursensors ist es vorteilhaft, dass die Temperaturummantelung Bohrungen aufweist, durch welche Stromkabel zu dem Heizelement sowie dem Temperatursensor verlaufen. Die Stromkabel verlaufen bevorzugt zunächst von der Probenhalterung durch die Bohrungen in der Isolierummantelung, anschließend zwischen der Isolierummantelung und dem Isolierboden und werden zwischen dem Isolierboden und dem Rohr nach außen geführt.

Es ist bevorzugt, dass die Bodenplatte eine Dicke in einem Bereich von 4 bis 6 cm, die Isolierummantelung sowie der Isolierdeckel eine Dicke in einem Bereich von 22,5 bis 27,5 cm aufweisen. Eine derartige Dicke ist ausreichend zum Vorsehen einer zuverlässigen Isolierung zu der Umgebung der Probenhalterung.

Eine weitere bevorzugte Ausgestaltung der Erfindung ist dadurch gekennzeichnet, dass die Vorrichtung einen Isolierblock und zumindest zwei Probenhalterungen aufweist, wobei der Isolierblock Aussparungen aufweist, in welchen die Probenhalterungen angeordnet sind. Bevorzugt können Aussparungen für die Probenhalterungen mittels eines Isolierdeckels verschlossen werden. Hierdurch können mehrere zu prüfende unterschiedliche oder gleiche Materialien auf unterschiedlichen Temperaturen zeitgleich in einer Vorrichtung getempert werden. Es ist bevorzugt, dass der Isolierblock und der Isolierdeckel aus einem thermisch isolierenden Material gefertigt sind. Die Stromversorgung der in dem Isolierblock bzw. den Probenhalterungen angeordneten elektrischen Komponenten erfolgt bevorzugt von der Unterseite mittels hochtemperaturbeständiger elektrischer Kabel.

Des Weiteren wird das eingangs genannte technische Problem durch ein Verfahren zur thermischen Lagerung von Proben in vorgenannter Vorrichtung gelöst, bei dem die Proben in Probenbehälter eingebracht werden, bei dem die Probenbehälter in einer Probenhalterung angeordnet werden, bei dem die Probenhalterung mittels zumindest eines Heizelements auf eine vorgegebene Prüftemperatur erwärmt wird und bei dem die in den Probenbehältern befindlichen Proben mittels der erwärmten Probenhalterung auf die vorgegebene Prüftemperatur erwärmt werden. Die mit dem Verfahren zusammenhängenden Vorteile entsprechend den in Bezug auf die erfindungsgemäße Vorrichtung genannten Vorteilen.

Eine bevorzugte Ausgestaltung des Verfahrens ist dadurch gekennzeichnet, dass die Temperatur der Probenhalterung mittels mindestens eines Temperatursensors gemessen wird und dass die Leistungsabgabe des Heizelements in Abhängigkeit der gemessenen Temperatur und der vorgegebenen Prüftemperatur geregelt wird. Hierdurch kann automatisiert über die gesamte Prüfdauer die vorgegebene Prüftemperatur eingestellt werden, ohne das ein Nutzer manuell Einstellungen vornehmen muss.

Im Folgenden wird die Erfindung anhand von Ausführungsbeispielen mit Bezug auf die Zeichnung erläutert. In der schematischen Zeichnung zeigen
- Fig. 1: eine schematische Ansicht eines Ausführungsbeispiels einer Probenhalterung in einer perspektivischen Darstellung,
- Fig. 2: einen unteren Teil eines weiteren Ausführungsbeispiels der Probenhalterung in einer Draufsicht,
- Fig. 3: eine Schnittansicht des in Fig. 2 dargestellten Ausführungsbeispiels der Probenhalterung entlang der Schnittlinie A-A umgeben von einer Isolierung,
- Fig. 4: eine Schnittansicht eines Ausführungsbeispiels eines Isolierblocks und zwei in dem Isolierblock gelagerten Probenhalterungen,
- Fig. 5: eine Schnittansicht eines weiteren Ausführungsbeispiels der Probenhalterung mit einer Isolierung,
- Fig. 6a: einen Ausschnitt einer Schnittansicht eines weiteren Ausführungsbeispiels der Probenhalterung mit einem Probenbehälter und
- Fig. 6b: einen Ausschnitt einer Schnittansicht eines weiteren Ausführungsbeispiels der Probenhalterung mit einem Probenbehälter und einem Adapter.

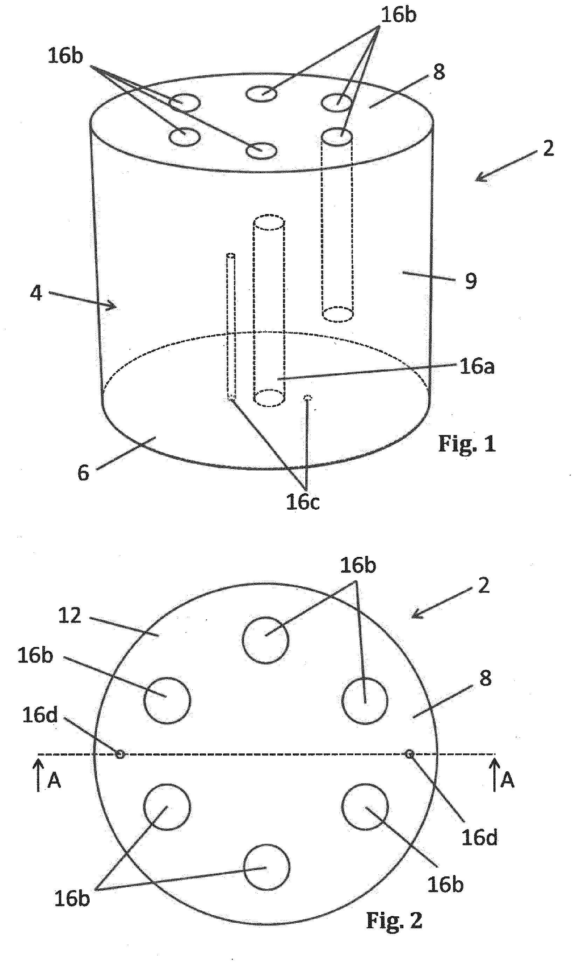

Fig. 1 zeigt eine perspektivische Ansicht eines Ausführungsbeispiels einer Probenhalterung 2. Die Probenhalterung 2 ist dabei in Form eines zylindrischen Körpers 9 mit einer Mantelfläche 4 und zwei die Mantelfläche 4 begrenzenden Schnittkreisflächen 6 und 8 ausgestaltet. Der Durchmesser der in Fig. 1 dargestellten Probenhalterung 2 beträgt bevorzugt 8 bis 10 cm.

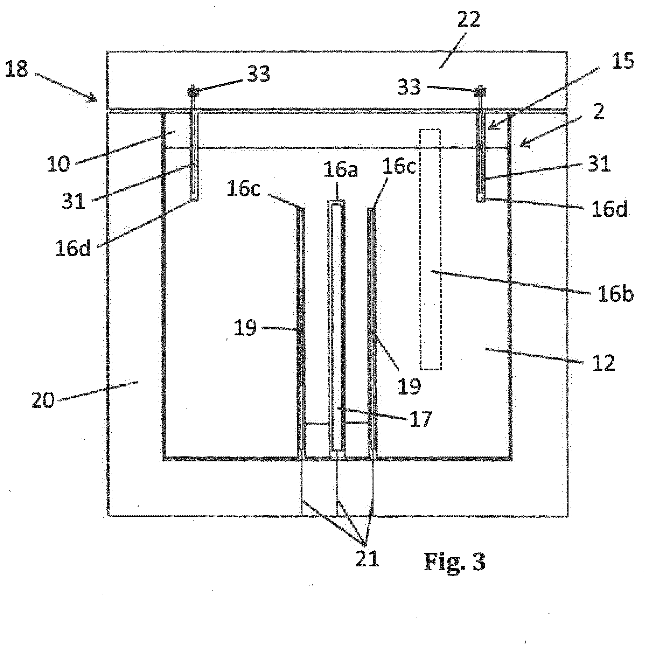

Bei der in Fig. 1 dargestellten Ausgestaltung ist die Probenhalterung 2 einteilig. Diese Probenhalterung 2 ist einfacher in der Herstellung und Handhabung. Bevorzugt ist allerdings die in den Fig. 3, 4 und 5 dargestellte zweiteilige Ausführungsform der Probenhalterung 2.

In der unteren Schnittkreisfläche 6 sind mehrere Bohrungen 16a und 16c in Form von Sacklochbohrungen vorgesehen. Bei der Bohrung 16a, die im Mittelpunkt der Schnittkreisfläche 6 angeordnet ist, handelt es sich um eine Bohrung 16a zur Aufnahme eines standardmäßigen Heizelements 17 (vgl. Fig. 3). Die untere Schnittkreisfläche 6 der Probenhalterung 2 weist zusätzlich zwei weitere Bohrungen 16c für an sich bekannte Temperatursensoren 19 (vgl. Fig. 3) auf. Anhand der Bohrung 16a zur Aufnahme des Heizelements 17und einer der Bohrungen 16c zur Aufnahme eines Temperatursensors 19 ist die Tiefe der vorgenannten Bohrungen 16a und 16c exemplarisch dargestellt.

In der oberen Schnittkreisfläche 8 der Probenhalterung 2 sind mehrere Bohrungen 16b in Form von Sacklochbohrungen vorgesehen. Bei den kreisförmig um den Mittelpunkt der Schnittkreisfläche 8 angeordneten Bohrungen 16b handelt es sich um Sacklochbohrungen zur Aufnahme der Probenbehälter 14. Anhand einer Bohrung 16b ist die Tiefe einer Sacklochbohrung zur Aufnahme eines Probenbehälters 14 exemplarisch dargestellt. Bevorzugt sind alle Bohrungen 16b zur Aufnahme eines Probenbehälters 14 im Wesentlichen identisch ausgestaltet. Es ist bevorzugt, dass insbesondere die Bohrungen 16a und 16b im Wesentlichen dieselbe Länge bzw. Tiefe aufweisen.

Bei dem zylindrischen Körper 9 handelt es sich beispielsweise um einen Körper aus Aluminium oder Kupfer, wobei die Ausbildung des zylindrischen Körpers 9 aus Kupfer bevorzugt ist. Mittels des Heizelements 17 wird der zylindrische Körper 9 auf die vorgegebene Prüftemperatur erwärmt. Hierdurch werden die in den Bohrungen 16b angeordneten Probenbehälter 14 und die darin angeordneten Proben auf die vorgegebene Prüftemperatur erwärmt. Bei dem verwendeten Heizelement 17 handelt es sich bevorzugt um ein längliches Heizelement, welches möglichst passgenau in der Bohrung 16a angeordnet werden kann. Beispielweise handelt es sich ein elektrisches Heizelemente, welches aus dem Stand der Technik bekannt ist.

Es ist bevorzugt, dass das Heizelement 17 mittels elektrischer Kabel mit einem Steuermittel (nicht dargestellt) verbunden ist, wobei das Steuermittel wiederum mit den Temperatursensoren 19 verbunden ist. Hierüber kann die von dem Heizelement 17 auf die Probenhalterung 2 übertragene Heizleistung in Abhängigkeit der gemessenen Temperatur geregelt werden.

In Fig. 2 ist ein unterer Teil 12 eines weiteren Ausführungsbeispiels der Probenhalterung 2 in einer Draufsicht dargestellt. Es ist ersichtlich, dass die Bohrungen 16b zur Aufnahme der Probenbehälter 14 einen im Wesentlichen identischen Abstand von dem Mittelpunkt einer oberen Schnittkreisfläche 8 des unteren Teils 12 aufweisen. Hierdurch können die gleichen Umgebungsverhältnisse für alle Proben sichergestellt werden. In dem in der Fig. 2 dargestellten Ausführungsbeispiel ist die Probenhalterung 2 zweiteilig ausgebildet und weist einen oberen Teil 10 und einen unteren Teil 12 (vgl. Fig. 3) auf. Fig. 2 zeigt die Oberseite des unteren Teils 12 der Probenhalterung 2. Im Unterschied zu dem in der Fig. 1 dargestellten Ausführungsbeispiel weist die obere Schnittkreisfläche 8 des unteren Teils 12 zusätzliche Bohrungen 16d auf, die jeweils zur Aufnahme eines Stabes 31 (vgl. Fig. 3) ausgestaltet sind. Die Stäbe 31 dienen der Sicherung des oberen Teils 10 während des Tempervorgangs der Proben. Die untere Schnittkreisfläche des oberen Teils 10 weist eine im Wesentlichen identische Ausgestaltung, wie die Oberseite des unteren Teils 12 auf.

Fig. 3 zeigt eine Schnittansicht des in Fig. 2 dargestellten Ausführungsbeispiels der Probenhalterung 2 entlang der Schnittlinie A-A umgeben von einer Isolierung 18.

Mittels der Isolierung 18 wird ein Energieverlust vermieden, der durch Wärme, die von der Probenhalterung 2 an die Umgebung abgegeben wird, verursacht wird. Zusätzlich wird ein Beibehalten einer einheitlichen Prüftemperatur sichergestellt. Die Isolierung 18 setzt sich aus einer Isolierummantelung 20 und einem Isolierdeckel 22 zusammen. Zusätzlich ist in der Bohrung 16a ein längliches Heizelement 17 angeordnet, welches nur ein geringes Spiel zu den Wandungen der Bohrung 16a aufweist. In den Bohrungen 16c ist jeweils ein Temperatursensor 19 angeordnet, der die Temperatur der Probenhalterung 2 misst. Die Temperatursensoren 19 weisen bevorzugt ebenfalls nur ein geringes Spiel zu den Wandungen der Bohrungen 16c auf. Mittels der Kabel 21 sind die Temperatursensoren 19 und das Heizelement 17 mit einer Stromquelle (nicht gezeigt) verbunden.

Der zylindrische Körper der Probenhalterung 2 ist zweiteilig ausgestaltet, wobei sich die Probenhalterung 2 aus dem oberen Teil 10 und dem unteren Teil 12 zusammensetzt. Hierdurch können Probenbehälter 14, die komplett in der Probenhalterung 2 versenkt werden, durch ein Entfernen des oberen Teils 10 der Probenhalterung 2 aus der Probenhalterung 2 entnommen werden. Wie anhand der Bohrungen 16a und 16c ersichtlich ist, sind die Bohrungen 16a und 16c an der Unterseite des unteren Teils 12 der Probenhalterung 2 angeordnet. Bevorzugt entspricht die Tiefe bzw. Länge der Bohrung 16b für die Probenbehälter 14 im Wesentlichen der der Tiefe bzw. Länge der Bohrungen 16a. Wie exemplarisch anhand einer Bohrung 16b dargestellt ist, ist diese als Sacklochbohrung in die Oberseite des unteren Teils 12 sowie in die Unterseite des oberen Teils 10 eingebracht.

Des Weiteren weist die Probenhalterung zwei Sicherungseinrichtungen 15 auf, die jeweils einen Stab 31 und eine an dem Stab 31 befestigte Mutter 33 umfassen. Der Stab 31 ist in einer in der Oberseite des unteren Teils 12 eingebrachten Bohrung 16d, welche in Form einer Sacklochbohrung ausgestaltet ist, verschraubt oder verschweißt. Weiterhin ist der Stab 31 durch eine in den oberen Teil 10 eingebrachte Bohrung 16d, welche in Form einer Durchgangsbohrung ausgestaltet ist, geführt und mittels der Mutter 33 in einem gewissen Abstand zu dem oberen Teil 10, beispielsweise in einem Abstand von 4 cm, verschraubt. Der Isolierdeckel 22 weist bevorzugt ebenfalls Aussparungen (nicht dargestellt) zur Aufnahme des Stabes 31 und der Mutter 33 auf.

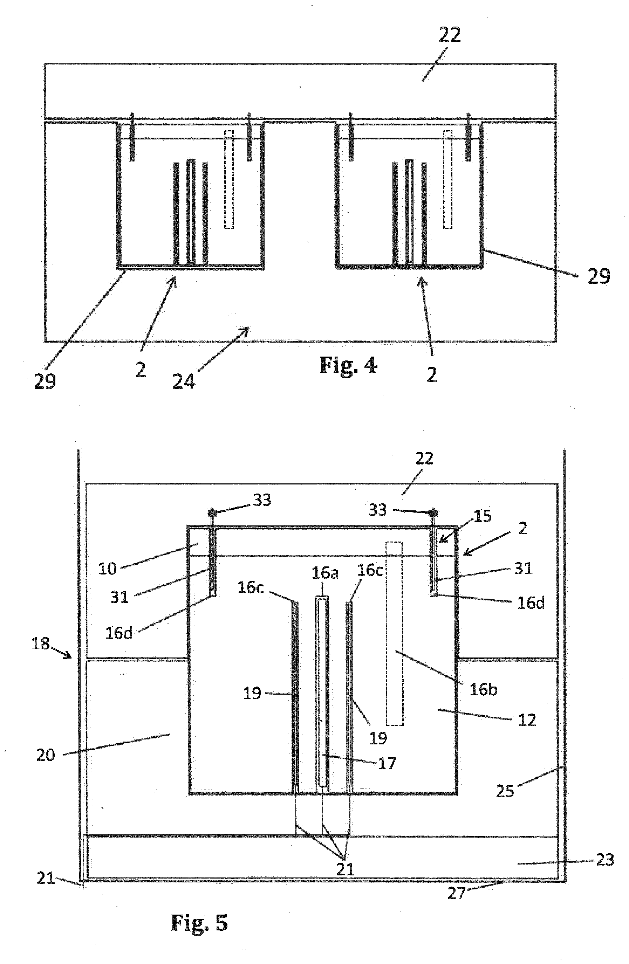

In Fig. 4 ist eine Schnittansicht eines Ausführungsbeispiels eines Isolierblocks 24 und zwei in dem Isolierblock 24 gelagerten Probenhalterungen 2 gezeigt. Der Isolierblock 24 weist zwei Aussparungen 29 auf, in welchen die Probenhalterungen 2 gelagert sind. Der Isolierblock 24 weist ebenfalls einen Isolierdeckel 22 auf, um die Probenhalterung 2 nach oben hin zu der Umgebung zu isolieren. Es ist bevorzugt, dass der Abstand zwischen den Probenhalterungen 2 in einem Bereich von 7 bis 13 cm liegt und besonders bevorzugt ca. 10 cm beträgt. Hierdurch können mehrere zu prüfende unterschiedliche oder gleiche Materialien auf unterschiedlichen Temperaturen zeitgleich in einer Vorrichtung geprüft werden.

In Fig. 5 ist eine Schnittansicht eines Ausführungsbeispiels einer Isolierung 18 umfassend einen Isolierdeckel 22, eine Isolierummantelung 20, einen Isolierboden 23 sowie ein Rohr 25 und eine in der Isolierung 18 gelagerten Probenhalterung 2 dargestellt. Dabei ist eine Bodenplatte 27 an die untere Öffnung des Rohres 25 angeschweißt. Die Isolierummantelung 20 und der Isolierdeckel 22 weisen jeweils eine Aussparung zur Aufnahme der Probenhalterung 2 auf. Zusätzlich sind in der Isolierummantelung 20 Führungskanäle zur Führung der Kabel 21 angeordnet. Die Kabel verlaufen anschließend zwischen der Isolierummantelung 20 und dem Isolierboden 23 bis zur Wandung des Rohres 25 und werden schließlich durch die Bodenplatte 27 nach außen geführt.

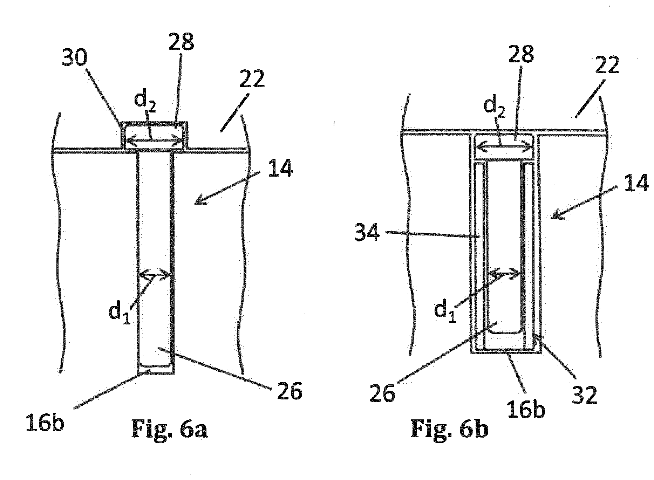

In Fig. 6a ist einen Ausschnitt einer Schnittansicht eines weiteren Ausführungsbeispiels der Probenhalterung 2 mit einem Probenbehälter 14 dargestellt. Es ist erkennbar, dass der Probenbehälter 14 sich aus einem länglichen Grundkörper 26 und einem Verschluss 28 zusammensetzt. Dabei weist der Grundkörper 26 einer ersten Außendurchmesser d₁ und der Verschluss 28 einen zweiten Außendurchmesser d₂ auf. Der Außendurchmesser d₂ ist größer als der Außendurchmesser d₁. Es ist ersichtlich, dass der Durchmesser der Bohrung 16b zur Aufnahme der Probenbehälter 14 im Wesentlichen dem ersten Außendurchmesser d₁ entspricht. Hierdurch können die Probenbehälter 14 nur teilweise in der Probenhalterung 2 aufgenommen werden, weshalb der Isolierdeckel 22 eine Aussparung 30 aufweist, die zu dem Verschluss 28 des Probenbehälters 14 korrespondiert. Hierdurch kann eine komfortable Entnahme der Probenbehälter 14 auch ohne zweiteilige Ausgestaltung der Probenhalterung 2 sichergestellt werden.

Fig. 6b zeigt einen Ausschnitt einer Schnittansicht eines weiteren Ausführungsbeispiels der Probenhalterung 2 mit einem Probenbehälter 14 und einem Adapter 32. Im Unterschied zu dem in Fig. 5a gezeigten Ausführungsbeispiel entspricht der Durchmesser der Bohrung 16b zur Aufnahme des Probenbehälters 14 dem zweiten Durchmesser d₂. Dementsprechend kann der Probenbehälter 14 vollständig in der Bohrung 16b versenkt werden. Der Adapter 32 setzt sich aus einem länglichen und rohrförmigen Schutzbehälter 34 zusammen, wobei die der Schutzbehälter 34 bevorzugt aus Kupfer oder aus Aluminium gefertigt ist. Mittels des Adapters 32 kann eine Wärmebrücke zwischen dem länglichen Grundkörper 26 des Probenbehälters 14 und der Wandung der Bohrung 16b geschaffen werden, so dass die in dem Probenbehälter 14 angeordneten Proben zuverlässig temperiert werden können.

## Patentansprüche

1. Vorrichtung zur thermischen Lagerung von Proben,
- mit mindestens einer Probenhalterung (2),
- mit einer Mehrzahl von Probenbehältern (14),
- mit mindestens einem Heizelement (17) und
- mit mindestens einem Temperatursensor (19),
- wobei die Probenbehälter (14) zur Aufnahme der Proben ausgestaltet sind,
- wobei die Probenhalterung (2) zumindest teilweise aus einem thermisch leitfähigen Material gefertigt ist,
- wobei die Probenbehälter (14) zumindest teilweise in der Probenhalterung (2) angeordnet sind und
- wobei das mindestens eine Heizelement (17) die Proben mittelbar über ein Heizen der Probenhalterung (2) auf eine vorbestimmte Prüftemperatur erwärmt und die Proben bei der Prüftemperatur über einen vordefinierten Prüfzeitraum tempert,
**dadurch gekennzeichnet,**
**dass** die Probenhalterung (2) Bohrungen (16a, 16b, 16c) zur Aufnahme der Probenbehälter (14), des mindestens einen Heizelements (17) und des mindestens einen Temperatursensors (19) aufweist und
- **dass** die Bohrungen (16b) zur Aufnahme von Probenbehältern (14) jeweils einen im Wesentlichen identischen Abstand von der zumindest einen Bohrung (16a) zur Aufnahme des Heizelements (17) aufweisen.

2. Vorrichtung nach Anspruch 1,
**dadurch gekennzeichnet,**
**dass** das thermisch leitfähige Material der Probenhalterung (2) eine Wärmeleitfähigkeit λ größer als 175 W/(m^{∗}K), bevorzugt eine Wärmeleitfähigkeit λ größer als 225 W/(m^{∗}K), aufweist.

3. Vorrichtung nach Anspruch 1 oder 2,
**dadurch gekennzeichnet,**
**dass** es sich bei dem thermisch leitfähigen Material um Kupfer oder Aluminium handelt.

4. Vorrichtung nach einem der Ansprüche 1 bis 3,
**dadurch gekennzeichnet,**
- **dass** die Probenbehälter (14) einen länglichen Grundkörper (26) mit einem ersten Außendurchmesser (d₁) und einen Verschluss (28) mit einem zweiten Außendurchmesser (d₂) aufweisen und
- **dass** der zweite Außendurchmesser (dz) größer als der erste Außendurchmesser (di) ist.

5. Vorrichtung nach Anspruch 4,
**dadurch gekennzeichnet,**
**dass** der Durchmesser der Bohrungen (16b) zur Aufnahme der Probenbehälter (14) im Wesentlichen dem ersten Außendurchmesser (di) entspricht.

6. Vorrichtung nach Anspruch 4,
**dadurch gekennzeichnet,**
- **dass** der Durchmesser der Bohrungen (16b) zur Aufnahme der Probenbehälter (14) größer oder gleich dem zweiten Außendurchmesser (d₂) ist und
- **dass** vorzugsweise zusätzlich zu den Probenbehältern (14) Adapter (32) in den Bohrungen (16b) angeordnet sind.

7. Vorrichtung nach einem der Ansprüche 1 bis 6,
**dadurch gekennzeichnet,**
- **dass** die Probenhalterung (2) in Form eines zylindrischen Körpers, bevorzugt in Form eines kreiszylindrischen Körpers, ausgebildet ist,
- wobei der zylindrische Körper eine Mantelfläche (4) und zwei die Mantelfläche (4) begrenzende Schnittflächen (6, 8) aufweist und
wobei das Heizelement (17) vorzugsweise in einer Bohrung (16a) im Mittelpunkt einer Schnittfläche (8) des zylindrischen Körpers angeordnet ist.

8. Vorrichtung nach einem der Ansprüche 1 bis 7,
**dadurch gekennzeichnet,**
- **dass** die Probenhalterung (2) zweiteilig ausgeführt ist,
- wobei ein Teil der Probenhalterung (2), bevorzugt ein oberer Teil (10) der Probenhalterung (2) von einem unteren Teil (12) der Probenhalterung (2), entfernbar ist, so dass die in der Probenhalterung (2) gelagerten Probenbehälter (14) entnehmbar sind.

9. Vorrichtung nach Anspruch 8,
**dadurch gekennzeichnet,**
- **dass** der obere Teil (10) der Probenhalterung (2) und der untere Teil (12) der Probenhalterung (2) mittels einer Sicherungseinrichtung (15) verbunden sind und
- **dass** die Sicherungseinrichtung (15) ein ungewünschtes Entfernen des oberen Teils (10) der Probenhalterung (2) verhindert.

10. Vorrichtung nach einem der Ansprüche 1 bis 9,
**dadurch gekennzeichnet,**
**dass** die Probenhalterung (2) zumindest teilweise von einer Isolierung (18) umgeben ist.

11. Vorrichtung nach Anspruch 10,
**dadurch gekennzeichnet,**
- **dass** die Isolierung (18) einen Isolierboden (23), eine Isolierummantelung (20) und einen Isolierdeckel (22) aufweist und
- **dass** ein Rohr (25) die Isolierung (18) ummantelt.

12. Vorrichtung nach einem der Ansprüche 1 bis 10,
**gekennzeichnet durch**,
- einen Isolierblock (24) und
- zumindest zwei Probenhalterungen (2),
- wobei der Isolierblock (24) Aussparungen (29) aufweist, in welchen die Probenhalterungen (2) angeordnet sind.

13. Verfahren zur thermischen Lagerung von Proben in einer Vorrichtung nach einem der Ansprüche 1 bis 12,
- bei dem die Proben in Probenbehälter eingebracht werden,
- bei dem die Probenbehälter in einer Probenhalterung angeordnet werden,
- bei dem die Probenhalterung mittels zumindest eines Heizelements auf eine vorgegebene Prüftemperatur erwärmt wird und
- bei dem die in den Probenbehältern befindlichen Proben mittels der erwärmten Probenhalterung auf die vorgegebene Prüftemperatur erwärmt werden.

14. Verfahren nach Anspruch 13,
- bei dem die Temperatur der Probenhalterung mittels mindestens eines Temperatursensors gemessen wird und
- bei dem die Leistungsabgabe des Heizelements in Abhängigkeit der gemessenen Temperatur und der vorgegebenen Prüftemperatur geregelt wird.

## Claims

1. Device for the thermal storage of samples,
- with at least one sample holder (2),
- with a plurality of sample containers (14),
- with at least one heating element (17) and
- with at least one temperature sensor (19),
- wherein the sample containers (14) are designed to receive the samples,
- wherein the sample holder (2) is at least partially made of a thermally conductive material,
- wherein the sample containers (14) are at least partially arranged in the sample holder (2) and
- wherein the at least one heating element (17) heats the samples indirectly by heating the sample holder (2) to a predetermined test temperature and anneals the samples at the test temperature over a predefined test period,
**characterised in**
- **that** the sample holder (2) has bores (16a, 16b, 16c) for receiving the sample containers (14), the at least one heating element (17) and the at least one temperature sensor (19), and
- **that** the bores (16b) for receiving sample containers (14) are each at a substantially identical distance from the at least one bore (16a) for receiving the heating element (17).

2. Device according to claim 1,
**characterized in**
**in that** the thermally conductive material of the sample holder (2) has a thermal conductivity A greater than 175 W/(m^{∗}K), preferably a thermal conductivity A greater than 225 W/(m^{∗}K).

3. Device according to claim 1 or 2,
**characterized in**
**that** the thermally conductive material is copper or aluminium.

4. Device according to any one of claims 1 to 3,
**characterized in**
- **that** the sample containers (14) comprise an elongated base body (26) with a first outer diameter (di) and a closure (28) with a second outer diameter (d₂), and
- **that** the second outer diameter (d₂) is larger than the first outer diameter (di).

5. Device according to claim 4,
**characterized in**
**that** the diameter of the bores (16b) for receiving the sample containers (14) substantially corresponds to the first outer diameter (di).

6. Device according to claim 4,
**characterized in**
- **that** the diameter of the bores (16b) for receiving the sample containers (14) is greater than or equal to the second outer diameter (d₂) and
- in that adapters (32) are preferably arranged in the bores (16b) in addition to the sample containers (14).

7. Device according to any one of claims 1 to 6,
**characterized in**
- **in that** the sample holder (2) is in the form of a cylindrical body, preferably in the form of a circular cylindrical body,
- the cylindrical body having a circumferential surface (4) and two cut surfaces (6, 8) bounding the circumferential surface (4), and
wherein the heating element (17) is preferably arranged in a bore (16a) in the centre of a cut surface (8) of the cylindrical body.

8. Device according to any one of claims 1 to 7,
**characterized in**
- **in that** the specimen holder (2) is made in two parts
- wherein a part of the sample holder (2), preferably an upper part (10) of the sample holder (2), is removable from a lower part (12) of the sample holder (2) so that the sample containers (14) stored in the sample holder (2) are removable.

9. Device according to claim 8,
**characterized in**
- **that** the upper part (10) of the sample holder (2) and the lower part (12) of the sample holder (2) are connected by means of a securing device (15), and
- **that** the securing device (15) prevents an undesired removal of the upper part (10) of the sample holder (2).

10. Device according to any one of claims 1 to 9,
**characterized in**
**that** the sample holder (2) is at least partially surrounded by an insulation (18).

11. Device according to claim 10,
**characterized in**
- **in that** the insulation (18) comprises an insulating base (23), an insulating sheath (20) and an insulating cover (22), and
- that a tube (25) encases the insulation (18).

12. Apparatus according to any one of claims 1 to 10,
**characterised by**,
- an insulating block (24) and
- at least two sample holders (2),
- wherein the insulating block (24) has recesses (29) in which the sample holders (2) are arranged.

13. Method for the thermal storage of samples in a device according to one of claims 1 to 12,
- in which the samples are placed in sample containers,
- in which the sample containers are arranged in a sample holder,
- in which the sample holder is heated to a predetermined test temperature by means of at least one heating element, and
- in which the samples located in the sample containers are heated to the predetermined test temperature by means of the heated sample holder.

14. Method according to claim 13,
- in which the temperature of the sample holder is measured by means of at least one temperature sensor, and
- in which the power output of the heating element is controlled as a function of the measured temperature and the predetermined test temperature.

## Revendications

1. Dispositif pour stockage thermique d'échantillons,
- avec au moins un porte-échantillon (2),
- avec une pluralité de supports à échantillons (14),
- avec au moins un élément chauffant (17) et
- avec au moins un capteur de température (19),
- où les supports à échantillons (14) sont conçus pour recevoir les échantillons,
- où le porte-échantillon (2) est au moins partiellement constitué d'un matériau thermo-conducteur,
où les supports à échantillons (14) sont au moins partiellement disposés dans le porte-échantillons (2), et
où l'au moins un élément chauffant (17) chauffe les échantillons indirectement en chauffant le porte-échantillon (2) à une température d'essai prédéterminée et tempère les échantillons à la température d'essai pendant une période de contrôle prédéfinie,
**caractérisé**
- **en ce que** le porte-échantillons (2) présente des alésages (16a, 16b, 16c) pour recevoir les supports à échantillons (14), l'au moins un élément chauffant (17) et l'au moins un capteur de température (19), et
- **en ce que** les alésages (16b) destinés à recevoir les supports à échantillons (14) se trouvent chacun à une distance essentiellement identique de l'u moins un alésage (16a) destiné à recevoir l'élément chauffant (17).

2. Dispositif selon la revendication 1,
**caractérisé**
- **en ce que** le matériau thermo-conducteur du porte-échantillon (2) a une conductivité thermique supérieure à 175 W/(m^{∗}K), de préférence une conductivité thermique 1 supérieure à 225 W/(m^{∗}K).

3. Dispositif selon la revendication 1 ou 2,
**caractérisé**
- **en ce que** le matériau thermo-conducteur est du cuivre ou de l'aluminium.

4. Dispositif conforme à l'une des revendications 1 à 3,
**caractérisé**
- **en ce que** les supports à échantillons (14) ont un corps de base allongé (26) avec un premier diamètre extérieur (di) et une fermeture (28) avec un deuxième diamètre extérieur (d₂), et
- **en ce que** le deuxième diamètre extérieur (d₂) est plus grand que le premier diamètre extérieur (di).

5. Dispositif selon la revendication 4,
**caractérisé**
- **en ce que** le diamètre des alésages (16b) destinés à recevoir les supports à échantillons (14) correspond essentiellement au premier diamètre extérieur (d₁).

6. Dispositif selon la revendication 4,
**Caractérisé**
- **en ce que** le diamètre des alésages (16b) destinés à recevoir les supports à échantillons (14) est supérieur ou égal au deuxième diamètre extérieur (d₂), et
- **en ce que**, de préférence, des adaptateurs (32) sont disposés dans les alésages (16b) en plus des supports à échantillons (14).

7. Dispositif selon l'une des revendications 1 à 6,
**caractérisé**
- **en ce que** le porte-échantillon (2) est en forme de corps cylindrique, de préférence en forme de corps cylindrique circulaire,
- où le corps cylindrique présente une surface circonférentielle (4) et deux surfaces de coupe (6, 8) délimitant la surface circonférentielle (4), et
- où l'élément chauffant (17) est disposé de préférence dans un alésage (16a) au centre d'une surface de coupe (8) du corps cylindrique.

8. Dispositif selon l'une des revendications 1 à 7,
caractérisé
- en ce sens que le porte-échantillon (2) est conçu en deux parties,
- où une partie du porte-échantillon (2), de préférence une partie supérieure (10) du porte-échantillon (2), peut être enlevée d'une partie inférieure (12) du porte-échantillon (2), de sorte que les supports à échantillons (14) stockés dans le porte-échantillon (2) puissent être retirés.

9. Dispositif selon la revendication 8,
**caractérisé**
- **en ce que** la partie supérieure (10) du porte-échantillon (2) et la partie inférieure (12) du porte-échantillon (2) sont reliées au moyen d'un dispositif de fixation (15), et
- **en ce que** le dispositif de fixation (15) empêche un retrait indésirable de la partie supérieure (10) du porte-échantillon (2).

10. Dispositif selon l'une des revendications 1 à 9,
**caractérisé**
- **en ce que** le porte-échantillon (2) est au moins partiellement entouré d'une isolation (18).

11. Dispositif selon la revendication 10,
**caractérisé**
- **en ce que** l'isolation (18) comprend une base isolante (23), une gaine isolante (20) et un couvercle isolant (22), et
- **en ce qu'**un tube (25) enveloppe l'isolation (18).

12. Dispositif selon l'une des revendications 1 à 10,
**caractérisé**
- **par** un bloc isolant (24) et au moins deux porte-échantillons (2),
- où le bloc isolant (24) présente des évidements (29) dans lesquels sont disposés les porte-échantillons (2).

13. Méthode de stockage thermique d'échantillons dans un dispositif selon l'une des revendications 1 à 12,
- dans laquelle les échantillons sont placés dans des supports à échantillons,
- dans laquelle les supports à échantillons sont disposés dans un porte-échantillons,
- dans laquelle le porte-échantillon est chauffé à une température d'essai prédéterminée, au moyen d'au moins un élément chauffant, et
- dans laquelle les échantillons situés dans les supports à échantillons sont chauffés à la température d'essai prédéterminée, au moyen du porte-échantillons chauffé.

14. Méthode selon la revendication 13,
- dans laquelle la température du porte-échantillon est mesurée au moyen d'au moins un capteur de température, et
- dans laquelle la puissance de sortie de l'élément chauffant est contrôlée en fonction de la température mesurée et de la température d'essai prédéterminée.
